Europäisches Patentamt

European Patent Office

Office européen des brevets

(11) Publication number: **0 121 572**
**B1**

(12) **EUROPEAN PATENT SPECIFICATION**

(45) Date of publication of patent specification: **01.04.87**

(21) Application number: **83903212.5**

(22) Date of filing: **14.10.83**

(86) International application number:
**PCT/JP83/00348**

(87) International publication number:
**WO 84/01648 26.04.84 Gazette 84/11**

(51) Int. Cl.⁴: **G 06 K 13/20, G 11 B 15/18**

(54) **TAPE READER.**

(30) Priority: **20.10.82 JP 185210/82**

(43) Date of publication of application:
**17.10.84 Bulletin 84/42**

(45) Publication of the grant of the patent:
**01.04.87 Bulletin 87/14**

(84) Designated Contracting States:
**DE FR GB**

(56) References cited:
**DE-A-1 424 538**
**JP-B-18 000 085**
**JP-B-35 013 401**
**US-A-3 175 747**
**US-A-3 431 403**

(73) Proprietor: **FANUC LTD**
**3580, Shibokusa Aza-Komanba Oshino-mura**
**Minamitsuru-gun Yamanashi 401-05 (JP)**

(72) Inventor: **MIZUNO, Yutaka**
**2-4, Takakura-cho Hachioji-shi**
**Tokyo 192 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Descriptions

The present invention relates to a tape reader with a capstan drive system.

A tape reader with a capstan drive system excites a feed magnet to abut a feed roller against a capstan roller for feeding a tape, and cuts off the excitation of the feed magnet and excites a brake magnet to stop the tape. The feed magnet is excited during the period from the application of a readout command to the completion of readout of information of one block, and the brake magnet is excited during the period from the end of the readout of the information to the application of the next readout command. During the excitation of the feed magnet the tape is fed for reading out thereof the information, and during the excitation of the brake magnet the tape supply is suspended. That is to say, only one of the feed magnet and the brake magnet is excited at one time.

In the case of a tape exchange, it is necessary to cut off the excitation of both the feed magnet and the brake magnet in order to release tape gripping parts. In the past, means has been employed for cutting off the excitation of the feed magnet and the brake magnet by a manual switch or the like. Accordingly, when the tape is exchanged with another after reading out information therefrom, it is necessary to operate the manual switch or the like, making the tape exchange operation cumbersome. Systems of this type have been disclosed in JP—B1—43—18085 and DE—A—1 424 538.

The present invention has for its object to automatically interrupt excitation of the brake magnet with the feed magnet as required, thereby allowing ease of tape exchange.

According to the present invention there is provided a tape reader with a capstan drive system provided with a feed magnet which is excitable to abut a feed roller against a capstan roller for feeding a tape, and a brake magnet which is excitable to stop the tape when the excitation of the feed magnet is interrupted, characterised by the provision of means for measuring the duration of said interruption of the excitation of the feed magnet, and control means for also interrupting the excitation of the brake magnet when it is detected that the duration of said interruption measured by the measuring means is in excess of a predetermined value.

Brief Description of the Drawings

Fig. 1 is a diagram explanatory of the principal part of an exemplary embodiment of the present invention;

Fig. 2 is a diagram explanatory of signals a and b in Fig. 1; and

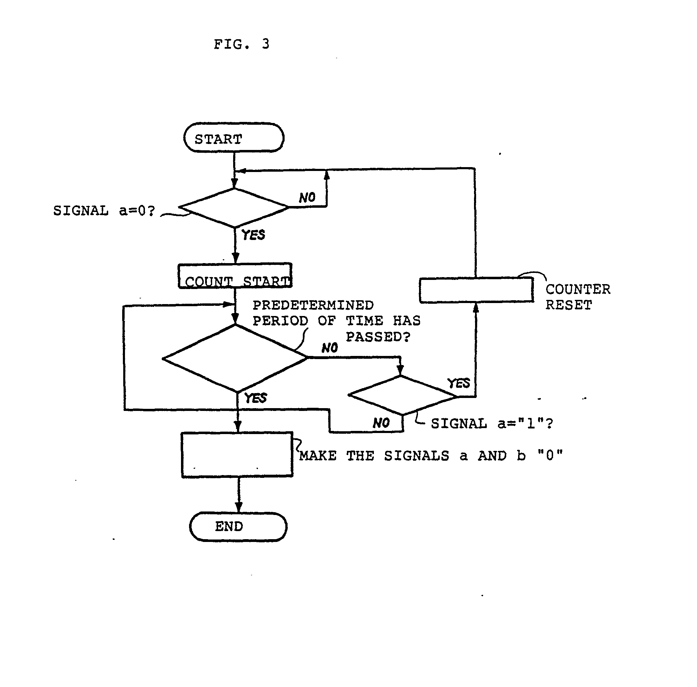

· Fig. 2 shows an example of a flowchart of a processor.

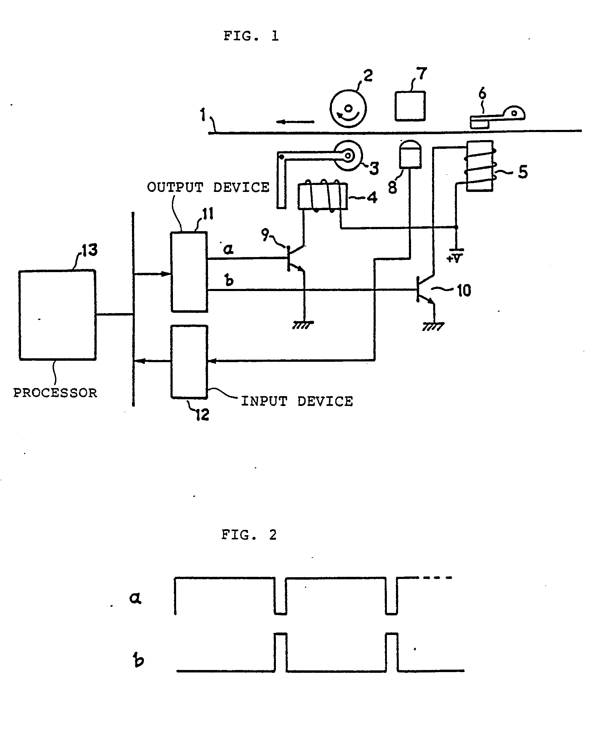

Fig. 1 is a diagram explanatory of the principal part of an embodiment of the present invention. Reference numeral 1 indicates a tape, 2 a capstan roller, 3 a feed roller, 4 a feed magnet, 5 a brake magnet, 6 a brake armature, 7 a light emitting device, 8 a photo detector, 9 and 10 transistors, 11 an output device, 12 an input device and 13 a processor such as a microprocessor. When the processor 13 provides a command for reading out information from the tape 1, a signal a from the output device 11 goes to a "1" and a signal b goes to a "0" to turn ON the transistor 9 and OFF the transistor 10. In consequence, source voltage +V is supplied to the feed magnet 4 to excite it, bringing the feed roller 3 into contact with the capstan roller 2 with the tape 1 gripped therebetween, the tape 1 being fed in the direction of the arrow with the rotation of the capstan roller 2. Since light from the light emitting device 7 is incident on the photo detector 8 in accordance with holes punched in the tape 1, punched information of the tape 1 is thus read out and transferred via the input device 12 to the processor 13. Since the processor 13 issues a command for stopping the tape 1 upon completion of the readout of the punched information of one block, the signals a and b from the output device 11 to to a "0" and a "1", respectively. As a result of this, the transistor 9 is turned OFF and the transistor 10 ON, by which the excitation of the feed magnet 4 is interrupted and the brake magnet 5 is excited, bringing the brake armature 6 into contact with the tape 1 to stop it.

Fig. 2 shows examples of the abovesaid signals a and b. When the signal a is a "1", the signal b is a "0" and the feed magnet 4 is excited but the excitation of the brake magnet 5 is interrupted, feeding the tape 1. On the other hand, when the signal a is a "0", the signal b is a "1" and the excitation of the feed magnet 4 is interrupted but the brake magnet 5 is excited, stopping the tape 1. In an ordinary punched information readout operation, the time during which the brake magnet 5 is excited to stop the tape 1 is about several mS.

When the readout of the punched information from the tape 1 is completed, since no command is issued for reading out the tape 1, the signal a goes to a "0". By measuring the time during which the signal a is at "0", it is possible to detect the completion of readout of the punched information from the tape 1. For measuring this time, various arrangements can be utilized, for example, a counter function of the processor 13 can be employed.

Fig. 3 illustrates an example of a flowchart of the processor. It is decided whether the signal a is at "0", that is, whether the processor 13 has issued a stop command, and when the signal a is at "0", a counter in the processor is caused to start counting clocks. When the count content of the counter reaches a predetermined value, that is, when a predetermined period of time has passed, the processor 13 issues a command for making the signals a and b "0s". In consequence, the excitation of the feed magnet 4 and the brake magnet 5 is interrupted, permitting an exchange of the tape 1. It is also possible to utilize an overflow signal of the counter in this case. Further, the abovesaid predetermined time can be selected to be approximately two seconds.

When a readout command is issued to force the signal a to the "1" state before the count content of the counter reaches the predetermined value, the counter is reset, and when the next stop command is issued to force the signal a to the "0' state, the counter starts to count clocks.

As the means for measuring the time for interruption of the excitation of the feed magnet 4, it is possible not only to utilize the aforementioned counter in the processor 13 but also to provide a counter which counts clocks when the signal a from the output device 11 to the transistor 9 goes to a "0" and to provide control means for forcing the signal b to the transistor 10 to the "0" state when the count content of the counter reaches a predetermined value. Also it is possible to provide a timer mechanism for performing the same operation as the aforementioned counter.

As has been described in the foregoing, the present invention is equipped with means which measures the time for interruption of the excitation of the feed magnet 4, such as a counter or timer, and control means which interrupts the excitation of the brake magnet also when it is detected that the time measured by the abovesaid means, such as the processor 13 or the like, has exceeded a predetermined time. When the tape 1 is exchanged with another tape after completion of the readout of the punched information of the tape 1, the excitation of the feed magnet 4 and the brake magnet 5 is automatically interrupted. Accordingly, an exchange of the tape 1 does not involve the necessity of manipulating a manual switch or the like; therefore, the present invention has the advantage of improved operability.

## Claims

1. A tape reader with a capstan drive system provided with a feed magnet (4) which is excitable to abut a feed roller (3) against a capstan roller (2) for feeding a tape (11), and a brake magnet (5) which is excitable to stop the tape (1) when the excitation of the feed magnet (4) is interrupted, characterised by the provision of means (13) for measuring the duration of said interruption of the excitation of the feed magnet (4), and control means (10, 11) for also interrupting the excitation of the brake magnet (5) when it is detected that the duration of said interruption measured by the measuring means (13) is in excess of a predetermined value.

2. A tape reader according to claim 1, wherein said predetermined value is substantially two seconds.

3. A tape reader according to claim 1 or 2, wherein a typical normal duration of the interruption of the excitation of the feed magnet (4), during which interruption the brake magnet (5) is excited, is in the order of several ms.

4. A tape reader according to any preceding claim, comprising control means (13) for providing a command for reading out information from the tape (1), the excitation of the feed magnet (4) only being provided for as long as said reading-out continues.

## Patentansprüche

1. Bandleser mit einem Treibrollenantriebssystem, das mit einem Vorschubmagneten (4), der erregbar ist, um eine Vorschubrolle (3) gegen eine Treibrolle (2) zum Vorschieben eines Bandes (1) zu drücken, und einem Bremsmagneten (5) versehen ist, der erregbar ist, um das Band anzuhalten, wenn die Erregung des Vorschubmagneten (4) unterbrochen ist, gekennzeichnet durch das Vorsehen

eines Mittels (13) zum Messen der Dauer der Unterbrechung der Erregung des Vorschubmagneten (4) und

von Steuermitteln (10, 11) zum Unterbrechen der Erregung des Bremsmagneten (5), wenn die Tatsache erfaßt wird, daß die Dauer der Unterbrechung, die durch das Mittel (13) zum Messen gemessen wird, einen vorbestimmten Wert überschreitet.

2. Bandleser nach Anspruch 1, bei dem der vorbestimmte Wert im wesentlichen 2 Sekunden beträgt.

3. Bandleser nach Anspruch 1 oder 2, bei dem eine typische normale Dauer der Unterbrechung der Erregung des Vorschubmagneten (4), während welcher Unterbrechung der Bremsmagnet (5) erregt wird, in der Größenordnung von einigen Millisekunden liegt.

4. Bandleser nach einem der vorhergehenden Ansprüche, mit einem Steuermittel (13) zum Erzeugen eines Befehls zum Auslesen von Information aus dem Band (1), wobei die Erregung des Vorschubmagneten (4) nur solange vorgesehen ist, wie das Auslesen andauert.

## Revendications

1. Un lecteur de bande équipé d'un système d'entraînement à cabestan comportant un aimant d'entraînement (4) qui peut être excité pour appliquer un galet d'entraînement (3) contre un galet de cabestan (2) afin d'entraîner une bande (1), et un aimant de frein (5) qui peut être excité pour arrêter la bande (1) lorsque l'excitation de l'aimant d'entraînement (4) est interrompue, caractérisé par l'existence de moyens (13) destinés à mesurer la durée de l'interruption de l'excitation de l'aimant d'entraînement (4), et de moyens de commande (10, 11) destinés à interrompre également l'excitation de l'aimant de frein (5) lorsque la durée de l'interruption mesurée par les moyens de mesure (13) dépasse une valeur prédéterminée.

2. Un lecteur de bande selon la revendication 1, dans lequel la durée prédéterminée est d'environ deux secondes.

3. Un lecteur de bande selon la revendication 1 ou 2, dans lequel une durée normale caractéristique de l'interruption de l'excitation de l'aimant d'entraînement (4), au cours de laquelle l'aimant de frein (5) est excité, est de l'ordre de quelques millisecondes.

4. Un lecteur de bande selon l'une quelconque des revendications précédentes, comprenant des moyens de commande (13) destinés à produire un ordre pour lire de l'information sur la bande (1), et dans lequel l'excitation de l'aimant d'entraînement (4) n'a lieu qu'aussi longtemps que cette lecture se poursuit.

FIG. 1

FIG. 2

FIG. 3

START

SIGNAL a=0? — NO

YES

COUNT START

PREDETERMINED PERIOD OF TIME HAS PASSED?

NO

YES

SIGNAL a="1"?

YES

NO

COUNTER RESET

MAKE THE SIGNALS a AND b "0"

END